# EUROPÄISCHE PATENTSCHRIFT

(11) **EP 0 949 300 B1**
(45) Veröffentlichungstag und Bekanntmachung des Hinweises auf die Patenterteilung: **25.07.2001**
(21) Anmeldenummer: 99106808.1
(22) Anmeldetag: 06.04.1999
(51) Int. Cl.: C09B 44/02, D21H 21/28

(54) **Sulfonsäuregruppenhaltige kationische Azofarbstoffe**
Cationic azo dyestuffs containing sulfonic-acid groups
Colorants azoiques cationiques contenant des groupes acide sulfonique

(30) Priorität: 09.04.1998 DE 19815945
(43) Veröffentlichungstag der Anmeldung: 13.10.1999
(73) Patentinhaber: BASF AKTIENGESELLSCHAFT, 67056 Ludwigshafen (DE)
(72) Erfinder: Schröder, Gunter-Rudolf Dr., 68259 Mannheim (DE); Mayer, Udo Dr., 67227 Frankenthal (DE); Tresch, Rainer, 67133 Maxdorf (DE)

(56) Entgegenhaltungen:
- EP-A- 0 159 549
- EP-A- 0 162 409
- US-A- 4 206 144

## Beschreibung

Die vorliegende Erfindung betrifft Verbindungen der allgemeinen Formel I 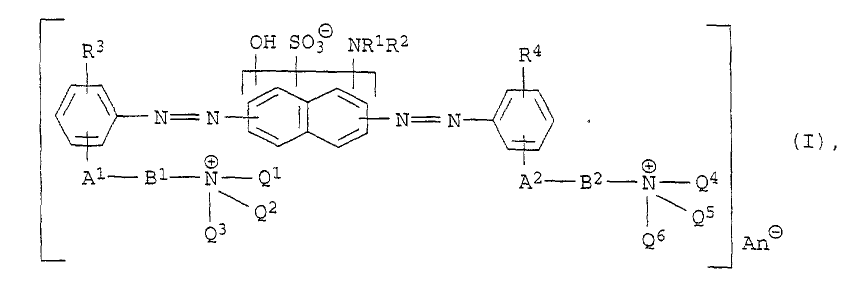 in der
- A¹ und A²: unabhängig voneinander Oxy, Carbonyl, Carbonyloxy, Carbonylimino, Iminocarbonyl, Carbonyl-(C₁-C₄)-alkylimino oder (C₁-C₄) -Alkyliminocarbonyl,
- B¹ und B²: unabhängig voneinander C₁-C₆-Alkylen, das durch 1 oder 2 nichtbenachbarte Oxy-, Imino- und unsubstituierte oder mit Hydroxy oder Methoxy substituierte C₁-C₄-Alkyliminogruppen unterbrochen sein kann,
- R¹: Wasserstoff, C₁-C₄-Alkyl, das gegebenenfalls mit Hydroxy, Methoxy, Chlor oder Phenyl substituiert ist,
- R²: Wasserstoff oder C₁-C₄-Alkyl oder R¹ und R² zusammen mit dem sie verbindenden Stickstoffatom einen 5- oder 6-gliedrigen gesättigten heterocyclischen Rest, der gegebenenfalls Stickstoff oder Sauerstoff als weiteres Heteroatom aufweist,
- R³ und R⁴: unabhängig voneinander Wasserstoff, C₁-C₄-Alkyl, das gegebenenfalls mit Hydroxy, Halogen oder Methoxy substituiert ist, Halogen, Nitro oder C₁-C₄-Alkoxy,
- Q¹, Q², Q³, Q⁴, Q⁵ und Q⁶: unabhängig voneinander Wasserstoff, C₁-C₁₀-Alkyl, das durch 1 bis 4 nichtbenachbarte Oxy-, Imino- und unsubstituierte oder mit Hydroxy oder Methoxy substituierte C₁-C₄-Alkyliminogruppen unterbrochen sein kann und das mit Hydroxy, Halogen oder Phenyl substituiert sein kann, oder Q¹ und Q² sowie Q⁴ und Q⁵ jeweils zusammen mit dem sie verbindenden Stickstoffatom einen 5- oder 6-gliedrigen heterocyclischen Rest, der gegebenenfalls Stickstoff oder Sauerstoff als weiteres Heteroatom aufweist, und
- An^{⊖}: das Äquivalent eines Anions bedeuten,
sowie ihre Verwendung zum Färben oder Bedrucken von polymerem Material.

Die EP-A-159 549 lehrt Monoazofarbstoffe aus α-Naphthol und Aminobenzoesäureammoniumalkylestern.

Ferner sind mit Aminobenzoesäureammoniumalkylestern als Diazokomponente und Resorcin als Kupplungskomponente Bisazofarbstoffe aus der EP-A-162 409 bekannt.

Die US-A-4 206 144 beschreibt Bisazofarbstoffe mit Aminohydroxynaphthalinsulfonsäuren als Kupplungskomponenten und N,N-Dimethyl-N-(3-aminomethoxybenzyl)-N-3-aminopropylammoniumchlorid als Diazokomponente.

Aufgabe der vorliegenden Erfindung war es, neue kationische Sulfonsäurefarbstoffe bereitzustellen. Die neuen Farbstoffe sollten sich in vorteilhafter Weise zum Färben oder Bedrucken von polymerem Material insbesondere Papier eignen und die mit ihnen erzielten Färbungen gute Gebrauchseigenschaften aufweisen.

Demgemäß wurden die eingangs näher bezeichneten Farbstoffe der Formel I gefunden.

Alle in der obengenannten Formel auftretenden Alkyl- oder Alkylengruppen können sowohl geradkettig als auch verzweigt sein.

Wenn Reste R¹ und R², Q¹ und Q² oder Q⁴ und Q⁵ zusammen mit dem sie verbindenden Stickstoffatom für einen 5- oder 6-gliedrigen gesättigten heterocyclischen Rest stehen, der gegebenenfalls Stickstoff oder Sauerstoff als weiteres Heteroatom aufweist, so können Reste wie Pyrrolidinyl, Piperidinyl, Morpholinyl, Piperazinyl, das am Stickstoff mit Methyl, Ethyl, n- und iso-Propyl, n-, iso-, sec.-Butyl, 2-Hydrcxyethyl, 2- oder 3-Hydroxypropyl substituiert sein kann, in Betracht kommen.

Wenn die Reste Q¹ und Q² oder Q⁴ und Q⁵ zusammen mit dem sie verbindenden Stickstoffatom für einen 5- oder 6-gliedrigen ungesättigten heterocyclischen Rest stehen, der gegebenenfalls Stickstoff oder Sauerstoff als weiteres Heteroatom aufweist, so können aromatische Reste wie Pyrrolyl, Pyrazolyl, Oxazolyl, Isooxazolyl oder Imidazolyl, das in 2- und/oder 4-Stellung durch Methyl, Ethyl, Propyl oder Butyl substituiert sein kann, N-3-(C₁-C₄)-Alkylimidazolyl, das in 2- und/oder 4-Stellung noch mit Methyl, Ethyl, Propyl oder Butyl substituiert sein kann, Pyridinio, 2-Methylpyridinio oder 4-Methylpyridinio in Betracht kommen.

Wenn die Reste A¹ und A² für Carbonyloxy oder dessen Aminoderivate stehen, so ist die Carbonylgruppe mit dem Phenylring verbunden, mit anderen Worten, es handelt sich um Abkömmlinge der Benzoesäure.

Halogen steht für Fluor, Chlor oder Brom.

Wenn in der obengenannten Formel substituierte Alkylreste auftreten, so sind diese in der Regel ein- oder zweifach substituiert.

Reste R¹, R², R³, R⁴, Q¹, Q², Q³, Q⁴, Q⁵ und Q⁶ sind z.B. Methyl, Ethyl, Propyl, Isopropyl, Butyl, Isobutyl, sec.-Butyl oder tert.-Butyl.

Reste Q¹, Q², Q³, Q⁴, Q⁵ und Q⁶ sind weiterhin z.B. Pentyl, Isopentyl, Neopentyl, tert-Pentyl, Hexyl, 2-Methylpentyl, Heptyl, Octyl, 2-Ethylhexyl, Isooctyl, Nonyl, Isononyl, Decyl (die obigen Bezeichnungen Isooctyl, Isononyl und Isodecyl sind Trivialbezeichnungen und stammen von den nach der Oxosynthese erhaltenen Alkoholen - vgl. dazu Ullmanns Encyklopädie der technischen Chemie, 4. Auflage, Band 7, Seiten 215 bis 217, sowie Band 11, Seiten 435 und 436).

Reste R¹, R³, R⁴, Q¹, Q², Q³, Q⁴, Q⁵ und Q⁶ sind weiterhin z.B. 2-Hydroxyethyl, 2- oder 3-Hydroxypropyl, 2- oder 4-Hydroxybutyl, 2-Methoxyethyl, 2- oder 3-Methoxypropyl, 2- oder 4-Methoxybutyl, 2-Chlorethyl, 2- oder 3-Chlorpropyl oder 2- oder 4-Chlorbutyl. Reste R¹, Q¹, Q², Q³, Q⁴, Q⁵ und Q⁶ sind weiterhin z.B. Benzyl, 1- oder 2-Phenylethyl.

Reste R³ und R⁴ sind weiterhin z.B. Methoxy, Ethoxy, Propoxy, Isopropoxy, Butoxy, Isobutoxy oder tert.-Butoxy.

Reste Q¹, Q², Q³, Q⁴, Q⁵ und Q⁶ sind weiterhin z.B. 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Propoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 2- oder 4-Butoxybutyl, 4,8-Dioxadecyl, 3,6,9-Trioxadecyl, 3,6,9-Trioxaundecyl, 3,6,9-Trioxadodecyl, 3,6,9,12-Tetraoxatridecyl, 3,6,9,12-Tetraoxatetradecyl, 4-Hydroxy-2-methyl-3-azabutyl, 4-Hydroxy-3-hydroxymethyl-2-methyl-3-azabutyl, 5-Hydroxy-2-methyl-3-azapentyl, 5-Hydroxy-3-(2-hydroxyethyl)-2-methyl-3-azapentyl, 8-Hydroxy-2-methyl-3-aza-6-oxaoctyl, 11-Hydroxy-2-methyl-3-aza-6,9-dioxaundecyl, 8-Hydroxy-3-(5-hydroxy-3-oxapentyl)-2-methyl-3-aza-6-oxaoctyl oder ll-Hydroxy-3-(8-hydroxy-3,6-dioxaoctyl)-2-methyl-3-aza-6,9-dioxaundecyl, N,N-Dimethylaminoethyl, N,N-Diethylaminoethyl, N,N-Dipropylaminoethyl, N,N-Dibutylaminoethyl, 3-(N,N-Dimethylamino)-propyl, 3-(N,N-Diethylamino)-propyl, 3-(N,N-Dipropylamino)-propyl oder 3-(N,N-Dibutylamino)-propyl.

Reste A¹ und A² sind z.B. Carbonyl-N-methylimino, Carbonyl-N-ethylimino, Carbonyl-N-propylimino und Carbonyl-N-butylimino.

Reste B¹ und B² sind z.B. Methylen, Ethylen, 1,2- oder 1,3-Propylen, 1,2-, 2,3- oder 1,4-Butylen, (CH₂)₂O(CH₂)₂, (CH₂)₃O(CH₂)₂, (CH₂)₃O(CH₂)₃, (CH₂)₂O(CH₂)₂O(CH₂)₂, (CH₂)₂NH(CH₂)₂, (CH₂)₃NH(CH₂)₂, (CH₂)₃NH(CH₂)₃, (CH₂)₂NH(CH₂)₂NH(CH₂)₂,

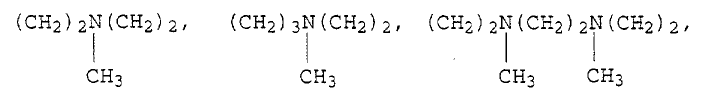

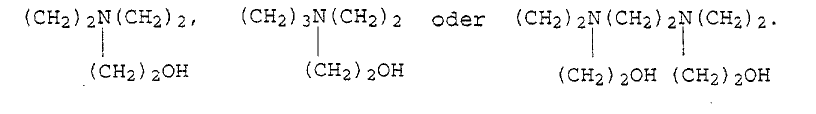

Das Äquivalent An^{⊖} eines Anions leitet sich z.B. von folgenden Anionen ab: Fluorid, Chlorid, Bromid, Iodid, Formiat, Acetat, Propionat, Mono-, Di- oder Trichloracetat, Lactat, Methoxyacetat, Citrat, Succinat, Methansulfonat, Benzolsulfonat, 2- oder 4-Methylbenzolsulfonat oder Naphthalinsulfonat.

Bevorzugt werden kationische Sulfonsäurefarbstoffe der allgemeinen Formel I, in der A¹ und A² unabhängig voneinander für Oxy, insbesondere für Carbonyl, Carbonyloxy oder Carbonylimino stehen.

Weiterhin werden solche Farbstoffe bevorzugt, in denen B¹ und B² unabhängig voneinander C₂-C₆-Alkylen bedeuten, das durch Oxy oder Methylimino unterbrochen sein kann. Besonders bevorzugt wird C₂-C₄-Alkylen, das durch Oxy oder Methylimino unterbrochen sein kann.

Ebenfalls bevorzugt sind Farbstoffe der allgemeinen Formel I, in der R¹ und R² Wasserstoff bedeuten.

Außerdem werden Farbstoffe der allgemeinen Formel I bevorzugt, in der Q¹ und Q⁴ Wasserstoff bedeuten. Farbstoffe, in denen Q¹, Q², Q³, Q⁴, Q⁵ und Q⁶ unabhängig voneinander Wasserstoff oder C₁-C₄-Alkyl bedeuten, sind ebenfalls bevorzugt. Insbesondere werden solche Farbstoffe bevorzugt, in denen Q¹ und Q⁴ Wasserstoff und Q², Q³, Q⁵ und Q⁶ unabhängig voneinander C₁-C₄-Alkyl bedeuten.

Ferner werden Farbstoffe bevorzugt, in denen die Diazokomponente doppelt gekuppelt wurde, also solche der allgemeinen Formel II 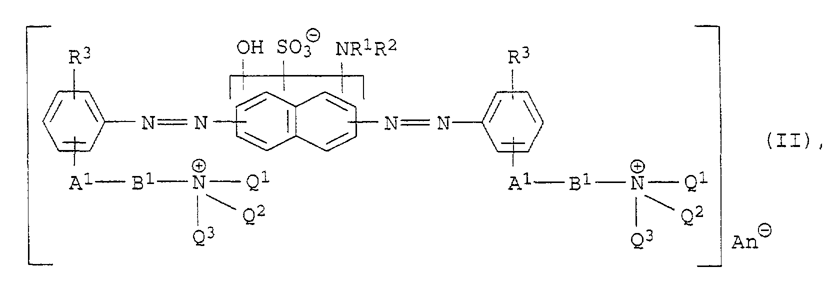 in der

A¹, B¹, R¹, R², R³, Q¹, Q², Q³ und An^{⊖} die oben angegebene Bedeutung haben.

Bevorzugt sind ferner kationische Säurefarbstoffe der allgemeinen Formel I, denen 1-Hydroxy-8-aminonaphthalin-5-sulfonsäure, 1-Hydroxy-7-aminonaphthalin-3-sulfonsäure, 1-Hydroxy-5-aminonaphthalinsäure-3-sulfonsäure und besonders bevorzugt 1-Hydroxy-6-aminonaphthalin-3-sulfonsäure und 1-Hydroxy-6-methylaminonaphthalin-3-sulfonsäure als Kupplungskomponenten zugrunde liegen.

Besonders werden Farbstoffe der allgemeinen Formel III 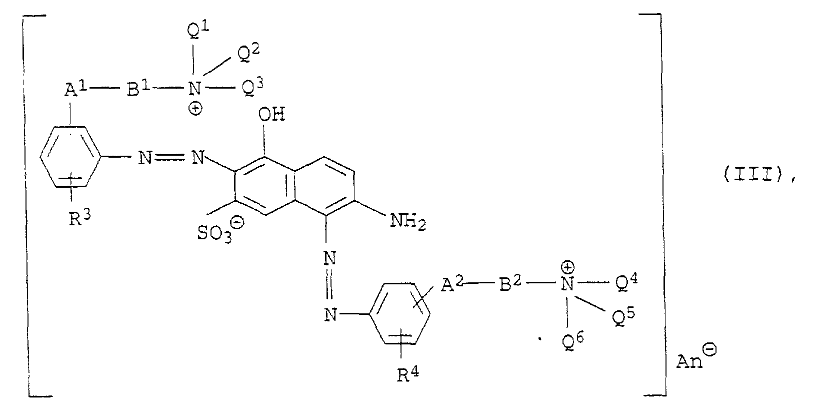 in der

A¹, A², B¹, B², R³, R⁴, Q¹, Q², Q³, Q⁴, Q⁵, Q⁶ und An^{⊖} die oben angegebene Bedeutung haben, bevorzugt und davon insbesondere solche, in denen jeweils die Reste A¹, B¹, Q¹, Q², Q³ und R³ mit den sich entsprechenden Resten A², B², Q⁴, Q⁵, Q⁶ und R⁴ identisch sind.

Weiterhin werden Farbstoffe der allgemeinen Formeln I, II und III bevorzugt, in denen A¹ und A² in ortho-Position zur Diazobrücke stehen.

Ganz besonders bevorzugt werden Farbstoffe der allgemeinen Formel I, in der A¹ und A² unabhängig voneinander für Oxy, Carbonyl, Carbonyloxy oder Carbonylimino, B¹ und B² unabhängig voneinander C₂-C₄-Alkylen, das durch Oxy oder Methylimino unterbrochen sein kann, R¹ und R² für Wasserstoff und Q¹, Q², Q³, Q⁴, Q⁵ und Q⁶ unabhängig voneinander für Wasserstoff oder C₁-C₄-Alkyl stehen.

Die neuen Farbstoffe können nach an sich bekannten Methoden erhalten werden. Zur Herstellung der Verbindungen der Formel I kann man Amine der Formel IV 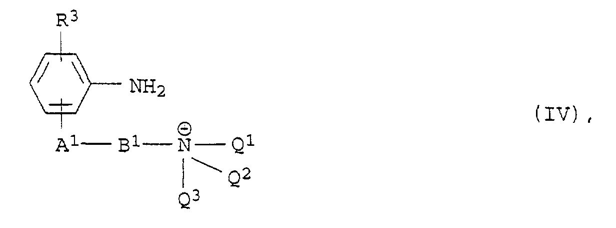 diazotieren und mit einer Kupplungskomponente der Formel V 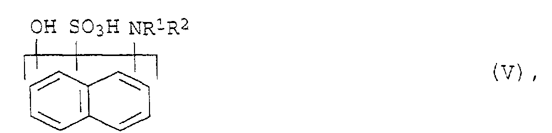 im schwach sauren bis neutralen pH-Bereich, in der Regel 3 bis 5, umsetzen. Zur Herstellung von Farbstoffen mit zwei verschiedenen Diazokomponenten macht man sich die schlechte Wasserlöslichkeit des Monoazofarbstoffs im Sauren, also pH 1 bis 2, zunutze und isoliert ihn, um ihn anschließend mit einer anderen Diazokomponente bei pH-Werten zwischen 3 und 7 zum Bisazofarbstoff umzusetzen. Natürlich läßt sich das zweistufige Verfahren auch für die zweimalige Kupplung mit derselben Diazokomponente anwenden, bringt jedoch in der Regel keinen Vorteil. Letztgenannte Farbstoffe werden einfach durch Kupplung mit der doppelten Menge Amine hergestellt.

Ebenso ist es möglich, erst den unquaternierten Bisazofarbstoff herzustellen und diesen anschließend mit einem C₂-C₄-Alkylenoxid oder mit einer Verbindung der Formel VI

Q³―Y (VI),

in der Q³ gegebenenfalls durch Hydroxy substituiertes C₁-C₄-Alkyl und Y eine Austrittsgruppe z.B. Chlorid, Bromid, Iodid, Methosulfat, Ethosulfat, Benzolsulfat oder 2- oder 4-Methylbenzolsulfonat, bedeutet, zu quaternieren.

Die Amine der Formel IV sind allgemein bekannt und in der EP-A-162 409 und US-A-4 206 144 beschrieben.

Die erfindungsgemäßen basischen Azofarbstoffe der Formel I können für sich alleine, in Gemischen untereinander und zusammen mit anderen kationischen oder anionischen Verbindungen in Form ihrer Lösungen oder in Form von Pulvern oder Granulaten angewendet werden. Sie eignen sich vorteilhaft zum Färben oder Bedrucken von polymerem Material, insbesondere von Papierstoffen, aber auch von Cellulose, Baumwolle, Leder, Bastfasern, Hanf, Flachs, Sisal, Jute, Kokos oder Stroh. Sie sind als Farbstoffe in Aufzeichnungsflüssigkeiten wie Tinten und im Ink-Jet geeignet, insbesondere aber für Massefärbungen von Papier.

Bei der Herstellung von Farbstoffpräparationen, enthaltend die neuen Farbstoffe der Formel I, ist die Anwendung von Polymeren, wie Polyacrylsäuren, Polyacrylsäurederivaten, Polyvinylaminen, Polyvinylamiden, Polyvinylacetaten, Polyvinylalkoholen, Polyvinylpyrrolidonen, Polysiloxanen oder Copolymeren der jeweiligen Monomeren hervorzuheben. Desgleichen können Oligomere des Ethylenimins, Ethylenoxids oder Propylenoxids oder Derivate dieser Oligomeren zur Anwendung kommen.

Die Farbstoffe können vorzugsweise bei der Herstellung von in der Masse gefärbtem, geleimtem und ungeleimtem Papier verwendet werden. Sie können ebenfalls zum Färben von Papier nach dem Tauchverfahren angewendet werden.

Das Färben von Papier, Leder oder Cellulose erfolgt nach an sich bekannten Methoden.

Die neuen Farbstoffe oder ihre Präparationen färben das Abwasser bei der Papierherstellung praktisch gar nicht oder nur wenig an, was für die Reinhaltung der Gewässer besonders günstig ist. Sie sind hoch substantiv, melieren nicht, wenn sie auf Papier gefärbt sind und sind weitgehend pH-unempfindlich. Die Färbungen auf Papier zeichnen sich durch eine gute Lichtechtheit aus. Nach längerem Belichten ändert sich die Nuance Ton-in-Ton.

Die gefärbten Papiere, die eine gute Bleichbarkeit aufweisen, sind naßecht, nicht nur gegen Wasser, sondern ebenfalls gegen Milch, Seifenwasser, Natriumchloridlösungen, Fruchtsäfte oder gesüßte Mineralwasser und wegen ihrer guten Alkoholechtheit auch gegen alkoholische Getränke beständig.

Mit den neuen Farbstoffen kann man auch Polyacrylnitriltextilien oder durch anionische Gruppen modifizierte Polyamid- oder Polyestertextilien färben, foulardieren oder bedrucken.

Die folgenden Beispiele sollen die Erfindung näher erläutern.

### Beispiel 1

a) 5,2 g (25 mmol) Anthranilsäure-(2-(N,N-dimethylamino)ethyl)ester wurden unter Zugabe von 25 ml 5-molarer Salzsäure in 50 ml Wasser gelöst und mit 50 g Eis versetzt. Anschließend wurde mit 8 ml einer 3,33-molaren Natriumnitritlösung 45 Minuten bei einer Temperatur zwischen 0 und 5°C diazotiert. Dann wurde der Nitritüberschuß mit ca. 0,5 g Amidosulfonsäure entfernt und mit Natriumhydrogencarbonat ein pH Wert von 2 eingestellt.
   In einem separaten Reaktionsgefäß wurden 6,44 g (25 mmol) 6-Amino-1-naphthol-3-sulfonsäure (I-Säure) durch Einstellen eines pH-Wertes von 6 bis 7 in 100 ml Wasser gelöst, indem mit 50 gew.-%iger Natronlauge ein pH-Wert von 6 bis 7 eingestellt wurde.
   Diese Lösung ließ man bei 10°C innerhalb von 30 min zur oben beschriebenen Diazoniumsalzlösung tropfen. Anschließend ließ man über Nacht nachrühren. Dabei erwärmte sich der Reaktionsansatz auf Raumtemperatur. Während des Zutropfens der Kupplungskomponente und der Nachrührzeit wurde der pH-Wert mit Natriumacetat auf 2 gehalten. Der kristalline Niederschlag wurde abfiltriert, mit Wasser nachgewaschen und getrocknet. Man erhielt auf diese Weise 10,8 g (94 % der Theorie) des Monoazofarbstoffes der Formel 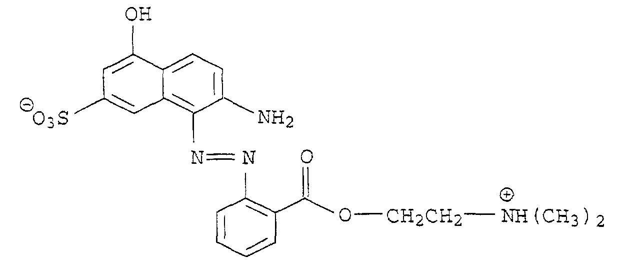
   - λₘₐₓ:: 490 nm; Ext./g: 30,1 (N-Methylpyrrolidon)
   - ¹H-NMR (DMSO-d₆):: 2,9 ppm (2s, 6H, CH₃), 3,6 (m, 2H, CH₂), 4,6 (m, 2H, CH₂), 7,0 - 8,4 (mehrere s, d, m, 8H, Ar-H),
   - Elementaranalyse:: Ber.: C: 54,9 H: 4,7 N: 12,2 0: 20,9 S: 7,0
   Gef.: C: 52,8 H: 5,0 N: 11,6 0: 24,2 S: 6,9
   C₂₁ H₂₂ N₄ O₆ S (458,5)
b) 5,2 g (25 mmol) Anthranilsäure-(2-(N,N-dimethylamino)ethyl)ester wurden unter Zugabe von 25 ml einer 5-molaren Salzsäure in 50 ml Wasser gelöst und mit 50 g Eis versetzt. Anschließend wurde mit 8 ml einer 3,33 molaren Natriumnitritlösung 45 Minuten bei einer Temperatur zwischen 0 und 5 °C diazotiert. Dann wurde der Nitritüberschuß mit ca. 0,2 - 0,5 g Amidosulfonsäure zerstört. Zu der so bereiteten eiskalten Diazoniumsalzlösung wurde eine Suspension bestehend aus 47 g (25 mmol: Trockengewicht 10,8 g) des unter a) hergestellten Monoazofarbstoffs in 100 ml Wasser und 45 g Essigsäure gegeben. Dann wurde mit Natriumcarbonat auf pH 4 gestellt und über Nacht nachgerührt. Dabei erwärmte sich der Reaktionsansatz auf Raumtemperatur. Man isolierte den kristallisierten Farbstoff, wusch ihn mit Wasser nach und trocknete ihn. Man erhielt 12,5 g (74 % der Theorie) eines Farbstoffs der Formel 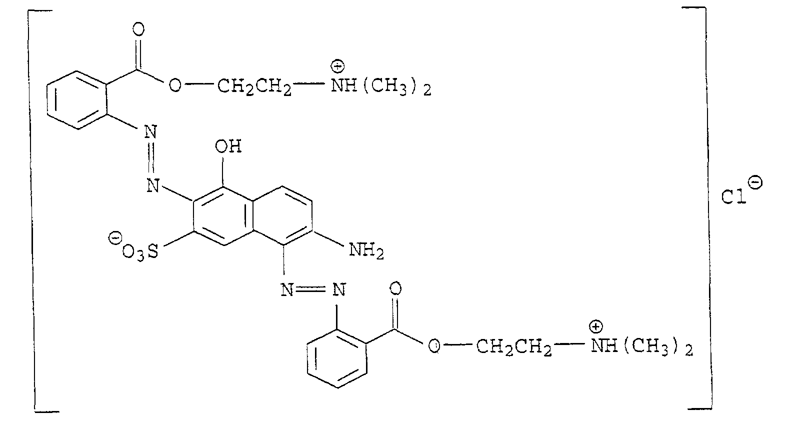
   - λₘₐₓ:: 498 nm; Ext./g: 51,3 (30 %ige Essigsäure)
   - ¹H-NMR (DMSO-d₆) :: 2,8 ppm (2s, 12H, CH₃), 3,5 (m, 2H, CH₂), 3,6 (m, 2H, CH₂), 4,6 (m, 2H, CH₂), 4,75 (m, 2H, CH₂), 7,0 - 8,7 (mehrere s, d, m, 11 H, Ar-H),

Dieser Farbstoff war löslich in einem Essigsäure/Wassergemisch und eignete sich zur Herstellung von scharlachrot gefärbtem, naßechten Papieren. Auch bei der Färbung von holzfreien Papierqualitäten wurden nur schwach gefärbte Abwasser beobachtet.

### Beispiel 2

6,3 g (25 mmol) Anthranilsäure-2-(2-(N,N-dimethylamino)ethoxy)ethylester gelöst in 7,58 g Salzsäure und 15 g Essigsäure wurden bei 5 bis 10°C mit 8 ml einer 3,33-molaren Natriumnitritlösung versetzt. Dann wurde der Nitritüberschuß mit ca. 0,5 g Amidosulfonsäure entfernt. Man ließ 30 min nachrühren und setzte 6,44 g (25 mmol) 6-Amino-1-naphthol-3-sulfonsäure (I-Säure) zur Diazoniumsalzlösung. Mit ca 10 ml einer 20 gew.-%igen Natronlauge wurde auf pH 4 gestellt und eine Stunde nachgerührt.
In einem separaten Reaktionsgefäß wurden 5,73 g (27,5 mmol) Anthranilsäure-(2-(N,N-dimethylamino)ethyl)ester in 8,3 g konzentrierter Salzsäure und 16,5 g Essigsäure gelöst und bei ca 10°C mit 8,8 ml einer 3,33 molaren Natriumnitritlösung versetzt. Man ließ 45 Minuten bei einer Temperatur zwischen 0 und 5°C rühren und zerstörte dann den Nitritüberschuß mit ca. 0,2-0,5 g Amidosulfonsäure. Diese Lösung wurde zu der oben beschriebenen Kupplungslösung gegeben. Mit ca. 20 ml einer 20 gew.-%igen Natronlauge wurde ein pH-Wert auf 3 bis 4 eingestellt. Man ließ zunächst 2 h bei 10°C, dann über Nacht bei Raumtemperatur nachrühren. Durch Zugabe von 90 g Essigsäure wurde eine ca. 9 gew.-%ige Lösung des Farbstoffs 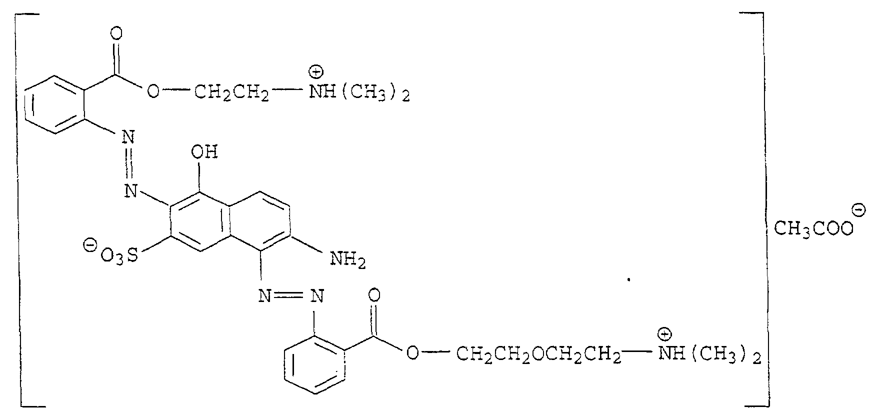 hergestellt. (λₘₐₓ: 490 nm; Ext./g: 4,07, Methanol: Essigsäure = 9:1).

Diese Farbstofflösung eignete sich zur Herstellung von scharlachrot gefärbtem, naßechten Papieren mit hoher Affinität zu holzfreiem Papier

### Beispiel 3

33,5 g (53 mmol) Anthranilsäure-2-(2-(N,N-dimethylamino)ethoxy)ethylester wurden in einer Mischung aus 15,9 g konz. Salzsäure und 5,25 g Essigsäure gelöst. Bei 10 bis 15°C gab man 16,8 ml einer 3,33-molaren Natriumnitritlösung hinzu und ließ 30 min nachrühren. Dann wurde der Nitritüberschuß mit ca. 0,2 bis 0,5 g Amidosulfonsäure entfernt. In die so bereitete eiskalte Diazoniumsalzlösung wurden 6,44 g (25 mmol) I-Säure eingestreut. Mit ca. 15 ml 20 %iger Natronlauge wurde pH 4 eingestellt. Nach ca. 1 Stunde war die Kupplungsreaktion abgeschlossen. Man erhielt eine ca 17 gew.-%ige Lösung des Farbstoffes mit der Strukturformel 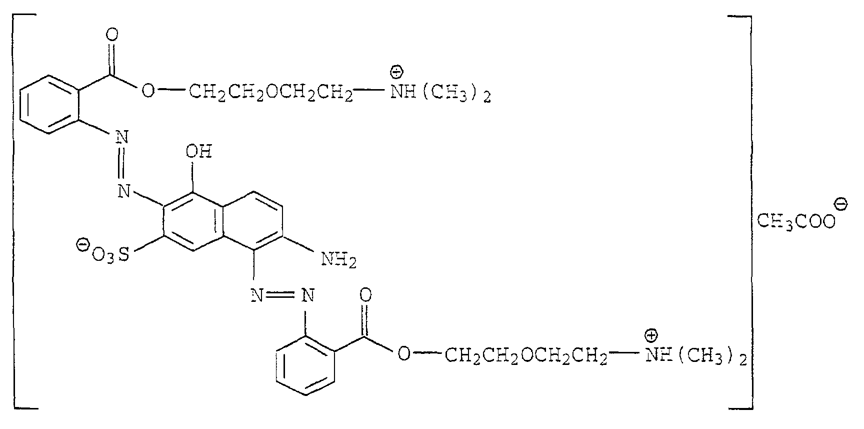 (λₘₐₓ : 498 nm Ext./g: 9,306, Methanol: Essigsäure = 9:1).

Analog den Beispielen 1, 2 und 3 wurden die in Tabelle 1 aufgeführten Farbstoffe erhalten. Die Absorptionsmaxima λₘₐₓ wurden in 30 gew.-%iger Essigsäure bestimmt.

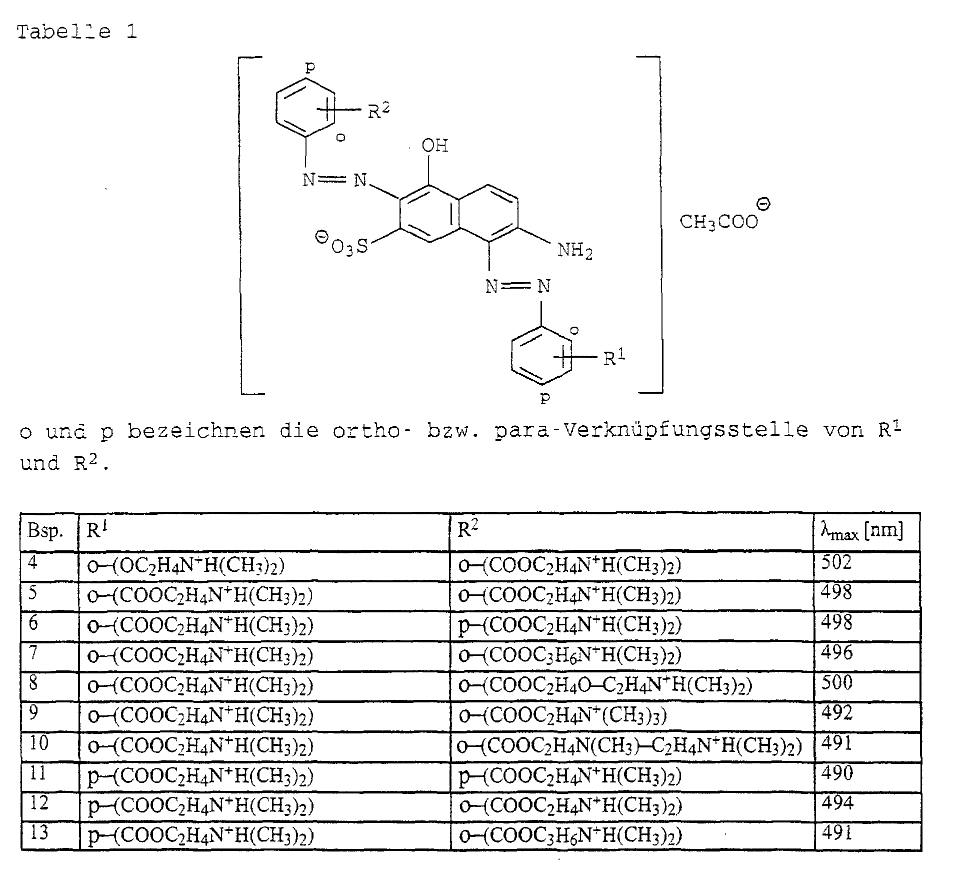

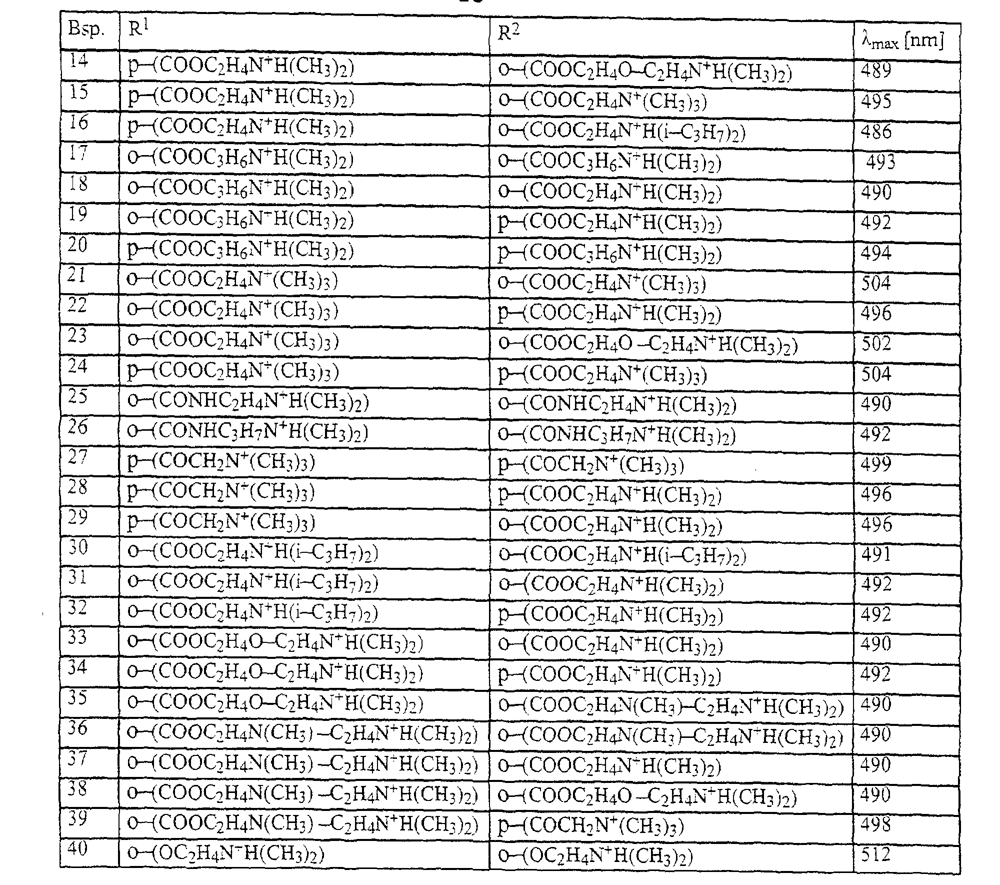

Außerdem wurden analog hergestellt:

### Beispiel 41

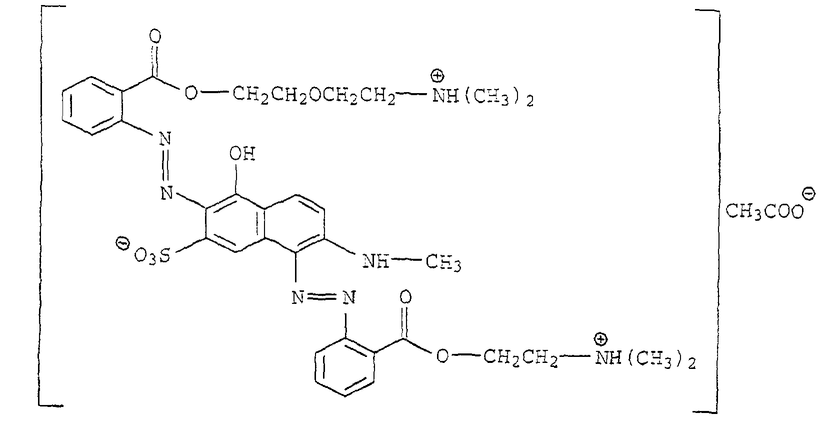

λₘₐₓ = 505 nm

### Beispiel 42

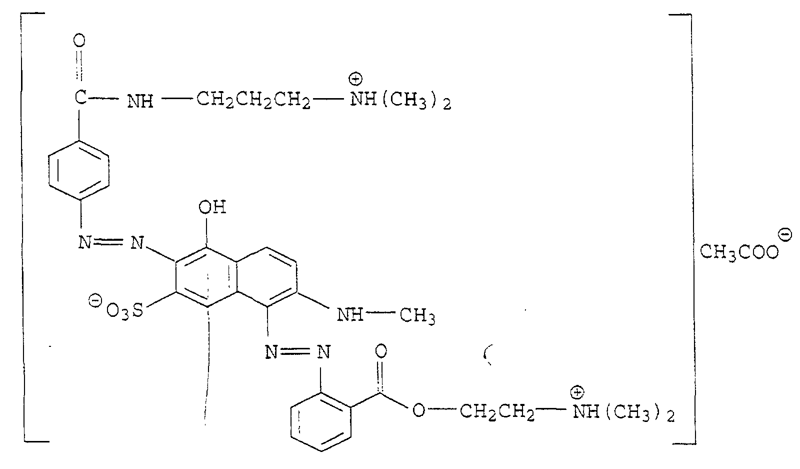

λₘₐₓ = 510 nm

## Patentansprüche

1. Kationische Sulfonsäurefarbstoffe der allgemeinen Formel I 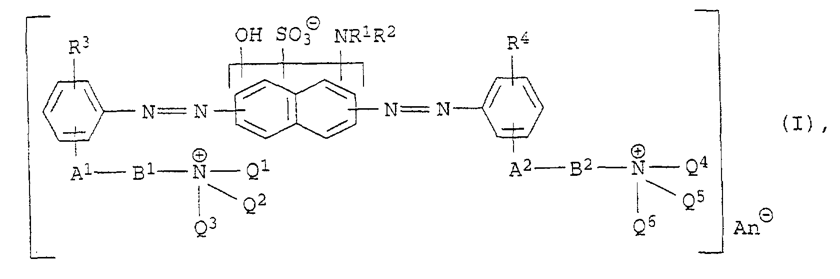 in der
A¹ und A² unabhängig voneinander Oxy, Carbonyl, Carbonyloxy, Carbonylimino, Iminocarbonyl, Carbonyl-(C₁-C₄)-alkylimino oder (C₁-C₄)(C₁-C₄)-Alkyliminocarbonyl,
B¹ und B² unabhängig voneinander C₁-C₆-Alkylen, das durch 1 oder 2 nichtbenachbarte Oxy-, Imino- und unsubstituierte oder mit Hydroxy oder Methoxy substituierte C₁-C₄-Alkyliminogruppen unterbrochen sein kann,
R¹ Wasserstoff, C₁-C₄-Alkyl, das gegebenenfalls mit Hydroxy, Methoxy, Chlor oder Phenyl substituiert ist,
R² Wasserstoff oder C₁-C₄-Alkyl oder R¹ und R² zusammen mit dem sie verbindenden Stickstoffatom einen 5- oder 6-gliedrigen gesättigten heterocyclischen Rest, der gegebenenfalls Stickstoff oder Sauerstoff als weiteres Heteroatom aufweist,
R³ und R⁴ unabhängig voneinander Wasserstoff, C₁-C₄-Alkyl, das gegebenenfalls mit Hydroxy, Halogen oder Methoxy substituiert ist, Halogen, Nitro oder C₁-C₄-Alkoxy,
Q¹, Q², Q³, Q⁴, Q⁵ und Q⁶ unabhängig voneinander Wasserstoff, C₁-C₁₀-Alkyl, das durch 1 bis 4 nichtbenachbarte Oxy-, Imino- und unsubstituierte oder mit Hydroxy oder Methoxy substituierte C₁-C₄-Alkyliminogruppen unterbrochen sein kann und das mit Hydroxy, Halogen oder Phenyl substituiert sein kann, oder Q¹ und Q² sowie Q⁴ und Q⁵ jeweils zusammen mit dem sie verbindenden Stickstoffatom einen 5- oder 6-gliedrigen heterocyclischen Rest, der gegebenenfalls Stickstoff oder Sauerstoff als weiteres Heteroatom aufweist, und
An^{⊖} das Äquivalent eines Anions bedeuten.

2. Kationische Sulfonsäurefarbstoffe nach Anspruch 1, in denen A¹ und A² unabhängig voneinander Oxy, Carbonyl, Carbonyloxy oder Carbonylimino bedeuten.

3. Kationische Sulfonsäurefarbstoffe nach Anspruch 1 oder 2, in denen B¹ und B² unabhängig voneinander C₂-C₆-Alkylen, das durch Oxy oder Methylimino unterbrochen sein kann, bedeuten.

4. Kationische Sulfonsäurefarbstoffe nach den Ansprüchen 1 bis 3, in denen R¹ und R² Wasserstoff bedeuten.

5. Kationische Sulfonsäurefarbstoffe nach den Ansprüchen 1 bis 4, in denen Q¹ und Q⁴ Wasserstoff und Q², Q³, Q⁵ und Q⁶ C₁-C₄-Alkyl bedeuten.

6. Kationische Sulfonsäurefarbstoffe nach den Ansprüchen 1 bis 5 der allgemeinen Formel II 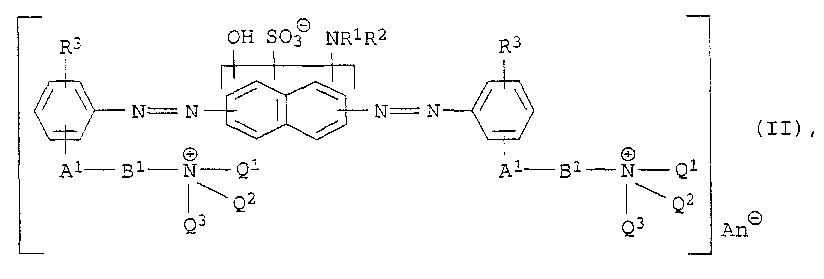 in der
A¹, B¹, R¹, R², R³, Q¹, Q², Q³ und An^{⊖} die in Anspruch 1 angegebene Bedeutung haben.

7. Kationische Sulfonsäurefarbstoffe nach den Ansprüchen 1 bis 5 der allgemeinen Formel III 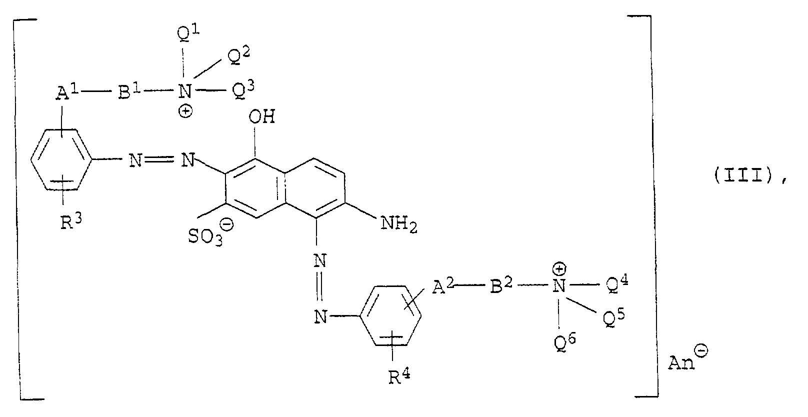 in der
A¹, A², B¹, B², R³, R⁴, Q¹, Q², Q³, Q⁴, Q⁵, Q⁶ und An^{⊖} die in Anspruch 1 angegebene Bedeutung haben.

8. Kationische Sulfonsäurefarbstoffe nach den Ansprüchen 1 bis 7, in denen A¹ und A² in ortho-Position zu Diazobrücke stehen.

9. Verwendung der Farbstoffe gemäß den Ansprüchen 1 bis 8 zum Färben oder Bedrucken von polymerem Material.

## Claims

1. A cationic sulfonic acid dye of the formula I 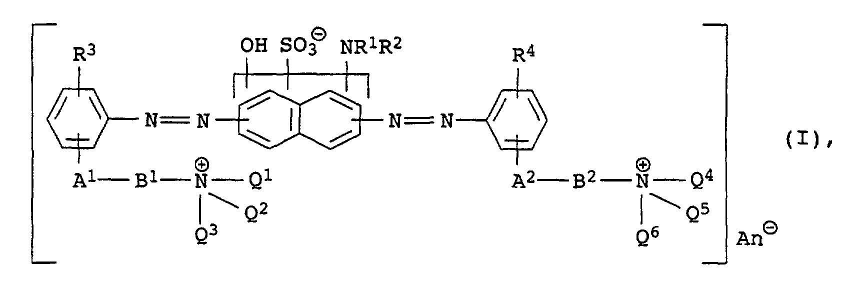 where
A¹ and A² independently of one another are oxy, carbonyl, carbonyloxy, carbonylimino, iminocarbonyl, carbonyl-(C₁-C₄)-alkylimino or (C₁-C₄)-alkyliminocarbonyl,
B¹ and B² independently of one another are C₁-C₆-alkylene which can be interrupted by 1 or 2 nonadjacent oxy, imino and unsubstituted or hydroxyl- or methoxy-substituted C₁-C₄-alkylimino groups,
R¹ is hydrogen or is C₁-C₄-alkyl which is unsubstituted or substituted by hydroxyl, methoxy, chloro or phenyl,
R² is hydrogen or C₁-C₄-alkyl or R¹ and R², together with the nitrogen atom connecting them, are a 5- or 6-membered saturated heterocyclic radical with or without nitrogen or oxygen as a further heteroatom,
R3 and R4 independently of one another are hydrogen, C₁-C₄-alkyl which is unsubstituted or substituted by hydroxyl, halo or methoxy, or are halo, nitro or C₁-C₄-alkoxy,
Q¹, Q², Q³, Q⁴, Q⁵ and Q⁶ independently of one another are hydrogen, or are C₁-C₁₀-alkyl which can be interrupted by from 1 to 4 nonadjacent oxy, imino and unsubstituted or hydroxyl- or methoxy-substituted C₁-C₄-alkylimino groups and can be substituted by hydroxyl, halo or phenyl, or Q¹ and Q², and Q⁴ and Q⁵, in each case together with the nitrogen atom connecting them, are a 5- or 6-membered heterocyclic radical with or without nitrogen or oxygen as a further heteroatom, and
An^{⊖} is the equivalent of an anion.

2. A dye as claimed in claim 1, wherein A¹ and A² independently of one another are oxy, carbonyl, carbonyloxy or carbonylimino.

3. A dye as claimed in claim 1 or 2, wherein B¹ and B² independently of one another are C₂-C₆-alkylene which can be interrupted by oxy or methylimino.

4. A dye as claimed in any of claims 1 to 3, wherein R¹ and R² are hydrogen.

5. A dye as claimed in any of claims 1 to 4, wherein Q¹ and Q⁴ are hydrogen and Q², Q³, Q⁵ and Q⁶ are C₁-C₄-alkyl.

6. A dye as claimed in any of claims 1 to 5 of the formula II 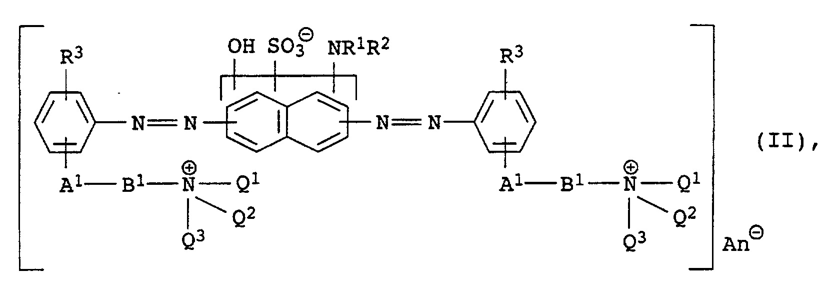 where
A¹, B¹, R¹, R², R³, Q¹, Q², Q³ and An^{⊖} are as defined in claim 1.

7. A dye as claimed in any of claims 1 to 5 of the formula III 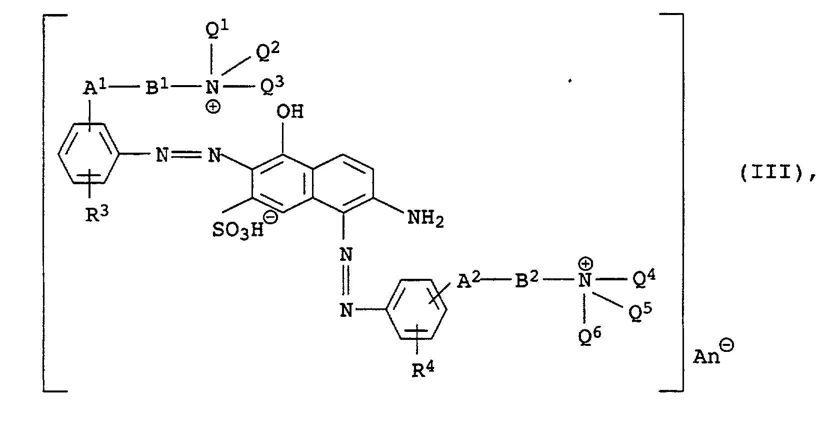 where
A¹, A², B¹, B², R³, R⁴, Q¹, Q², Q³, Q⁴, Q⁵, Q⁶ and An^{⊖} are as defined in claim 1.

8. A dye as claimed in any of claims 1 to 7, wherein A¹ and A² are ortho to the diazo bridge.

9. The use of a dye as claimed in any of claims 1 to 8 for dyeing or printing polymeric material.

## Revendications

1. Colorants cationiques à base d'acide sulfonique de formule générale I 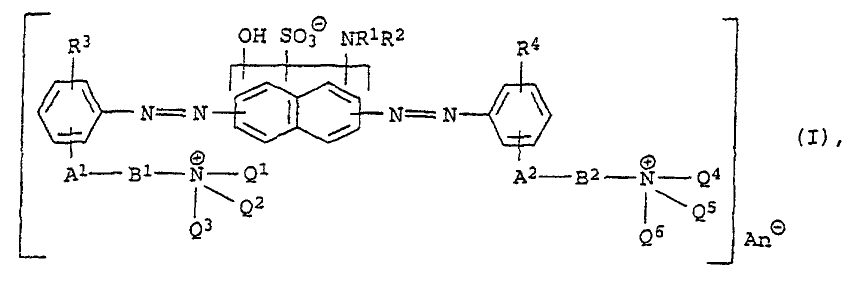 dans laquelle
A¹ et A² représentent, indépendamment l'un de l'autre, un groupe oxy, carbonyle, carbonyloxy, carbonylimino, iminocarbonyle, carbonyl-(alkyle en C₁ à C₄)-imino ou (alkyle en C₁ à C₄)-iminocarbonyle,
B¹ et B² représentent, indépendamment l'un de l'autre, un groupe alkylène en C₁ à C₆, qui peut être interrompu par 1 ou 2 groupes oxy-, imino- et (alkyle en C₁ à C₄)-imino non substitués ou substitués par un groupe hydroxy ou méthoxy, non vicinaux,
R¹ représente un atome d'hydrogène, un groupe alkyle en C₁ à C₄, qui est éventuellement substitué par un groupe hydroxy, méthoxy, chloro ou phényle,
R² représente un atome d'hydrogène ou un groupe alkyle en C₁ à C₄ ou bien R¹ et R² forment ensemble, avec l'atome d'azote qui les lie, un résidu hétérocyclique saturé à 5 ou 6 maillons, qui comprend éventuellement un atome d'azote ou d'oxygène en tant qu'hétéroatome supplémentaire,
R³ et R⁴ représentent indépendamment l'un de l'autre un atome d'hydrogène, un groupe alkyle en C₁ à C₄ qui est éventuellement substitué par un groupe hydroxy, halogéno ou méthoxy, un atome d'halogène, un groupe nitro ou alcoxy en C₁ à C₄,
Q¹, Q², Q³, Q⁴, Q⁵ et Q⁶ représentent, indépendamment les uns des autres, un atome d'hydrogène, un groupe alkyle en C₁ à C₁₀, qui peut être interrompu par 1 à 4 groupes oxy-, imino- et (alkyle en C₁ à C₄)-imino non substitués ou substitués par un groupe hydroxy ou méthoxy, non vicinaux, et qui peut être substitué par un groupe hydroxy, halogéno ou phényle, ou bien Q¹ et Q² ainsi que Q⁴ et Q⁵ forment chacun, ensemble avec l'atome d'azote qui les lie, un résidu hétérocyclique à 5 ou 6 maillons, qui comprend éventuellement un atome d'azote ou d'oxygène en tant qu'hétéroatome supplémentaire, et An^{⊖} représente l'équivalent d'un anion.

2. Colorants cationiques à base d'acide sulfonique selon la revendication 1, dans lesquels A¹, et A² représentent, indépendamment l'un de l'autre, un groupe oxy, carbonyle, carbonyloxy ou carbonylimino.

3. Colorants cationiques à base d'acide sulfonique selon la revendication 1 ou 2, dans lesquels B¹ et B² représentent, indépendamment l'un de l'autre, un groupe alkylène en C₂ à C₆, qui peut être interrompu par un groupe oxy ou méthylimino.

4. Colorants cationiques à base d'acide sulfonique selon les revendications 1 à 3, dans lesquels R¹ et R² représentent un atome d'hydrogène.

5. Colorants cationiques à base d'acide sulfonique selon les revendications 1 à 4, dans lesquels Q¹ et Q⁴ représentent un atome d'hydrogène et Q², Q³, Q⁵ et Q⁶ représentent un groupe alkyle en C₁ à C₄.

6. Colorants cationiques à base d'acide sulfonique selon les revendications 1 à 5 de formule générale II 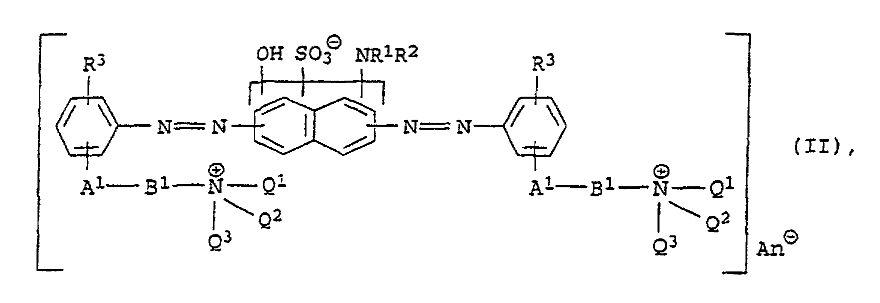 dans laquelle
A¹, B¹, R¹, R², R³, Q¹, Q², Q³ et An- prennent la signification indiquée dans la revendication 1.

7. Colorants cationiques à base d'acide sulfonique selon les revendications 1 à 5 de formule générale III 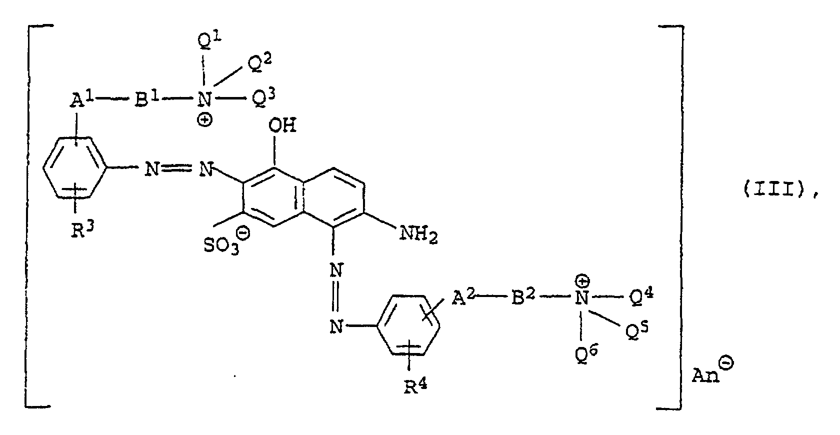 dans laquelle
A¹, A², B¹, B², R³, R⁴, Q¹, Q², Q³, Q⁴, Q⁵, Q⁶ et Anprennent la signification indiquée dans la revendication 1.

8. Colorants cationiques à base d'acide sulfonique selon les revendications 1 à 7, dans lesquels A¹, A², se trouvent en position ortho par rapport au pont diazoïque.

9. Utilisation des colorants selon les revendications 1 à 8 pour la coloration ou l'impression de matières polymères.
